# DEMANDE DE BREVET EUROPEEN

(11) **EP 2 620 189 A1**
(43) Date de publication de la demande: **31.07.2013**
(21) Numéro de dépôt: 12008190.6
(22) Date de dépôt: 07.12.2012
(51) Int. Cl.: A63C 10/06, A63C 10/24, F16B 41/00

(54) **Pièce de réglage d'un article de sport**

(30) Priorité: 25.01.2012 FR 1200223
(71) Demandeur: SALOMON S.A.S., 74370 Metz-Tessy (FR)
(72) Inventeur: Adamczewski, David, 74000 Annecy (FR); Gonthier, Jean-François, 74540 Viuz-La-Chiesaz (FR)

(57) **Abrégé**

Pièce de réglage (6) rotative apte à être solidarisée à une première pièce constitutive (52) d'un article de sport (1).

La pièce de réglage (6) comprend une gorge (6.4) destinée à recevoir une partie (7.2) d'une paroi de retenue (7) liée à l'article de sport (1) de manière à maintenir la pièce de serrage (6) sur la paroi de retenue(7), lorsque la pièce de serrage (6) est désolidarisée de la première pièce constitutive (52) de l'article de sport (1).

## Description

La présente invention concerne une pièce de réglage d'un article de sport. Un tel article de sport peut être une fixation, ou dispositif de retenue d'un pied ou d'une chaussure, sur un engin de sport tel qu'un surf sur neige ou snowboard, un ski, une raquette à neige, un patin à roues.

Communément, une fixation d'un snowboard comprend une embase sur laquelle est attaché au moins un lien de retenue ou de serrage d'un pied ou d'une chaussure. Un tel dispositif est par exemple décrit dans les documents EP-A-1 935 460 et FR-A-2 820 049. Le lien de retenue ou de serrage se décompose généralement en trois parties : une première portion reliée à l'embase, une deuxième portion, dite portion de couverture d'une partie du pied, et une troisième portion reliée également à l'embase. La position de la portion de couverture est réglable par rapport à la première portion, tout comme il est réglable par rapport à la troisième portion. Ces réglages permettent de bien positionner la portion de couverture qui est destinée à être en contact avec le pied ou la chaussure du surfeur. Ce bon positionnement apporte du confort au chaussage. Le premier réglage de la position de la deuxième portion par rapport à la première portion intègre un mécanisme à cliquet. En usage, c'est à ce niveau que le lien s'ouvre chaque fois que l'utilisateur veut mettre ou retirer sa chaussure de la fixation. Le premier mécanisme de réglage doit donc être robuste et facile à manipuler. Il est assez complexe et couteux. A l'inverse, le deuxième réglage de la position de la deuxième portion par rapport à la troisième portion est généralement peu modifié en usage. On le règle une fois pour s'adapter à une chaussure. Ce deuxième mécanisme de réglage doit être sûr mais peut être simplifié pour être plus économique. Un mode de réalisation de ce deuxième mécanisme de réglage consiste à utiliser une vis se fixant sur la portion de couverture et passant à travers la troisième portion. Ce mode de réalisation est très simple et économique mais présente un inconvénient, une fois la vis désengagée, elle peut tomber et on peut la perdre. En effet, du fait de sa petite taille et de l'environnement extérieur, la vis peut être difficile à rechercher. Par exemple, elle peut s'enfouir dans la neige.

Le but de l'invention est de remédier à ces inconvénients et notamment de proposer une pièce de réglage facile à retrouver.

Un autre but est de maintenir une pièce de réglage proche de son emplacement en usage.

Un autre but est de proposer une pièce de réglage facile à assembler à l'article de sport.

L'invention propose une pièce de réglage rotative apte à être solidarisée à une première pièce constitutive d'un article de sport.

La pièce de réglage est **caractérisée en ce qu'**elle comprend une gorge destinée à recevoir une partie d'une paroi de retenue liée à l'article de sport de manière à maintenir la pièce de serrage sur la paroi de retenue, lorsque la pièce de serrage est désolidarisée de la première pièce constitutive de l'article de sport.

Ainsi, la pièce de réglage est toujours reliée à l'article de sport et ne peut pas être perdue, même lorsque le desserrage est totale. Le problème de retrouver cette pièce ne se pose plus.

Selon des aspects avantageux mais non obligatoires de l'invention, une telle pièce de réglage peut incorporer une ou plusieurs des caractéristiques suivantes, prises dans toute combinaison techniquement admissible :
- La pièce de réglage est destinée à faire coopérer un deuxième moyen d'indexation d'une deuxième pièce constitutive de l'article de sport avec un premier moyen d'indexation lié à la première pièce constitutive de l'article de sport.
- La pièce de réglage est apte à exercer un effort sur la deuxième pièce constitutive de l'article de sport de manière à la rapprocher de la première pièce constitutive de l'article de sport.
- La paroi de retenue est solidaire de la première pièce constitutive de l'article de sport.
- La paroi de retenue est souple.
- La gorge de la pièce de réglage est bordée par une collerette munie d'une fente permettant de faciliter la mise en place de la pièce de réglage sur la paroi de retenue. Avantageusement, la fente est inclinée d'un angle par rapport à un plan perpendiculaire à l'axe de rotation de la pièce de réglage.
- La pièce de réglage comprend une tige filetée apte à coopérer avec le filetage d'un écrou solidaire de la première pièce constitutive de l'article de sport.

L'invention concerne également une fixation d'une planche de glisse munie de cette pièce de réglage ainsi qu'une planche de glisse équipée d'une telle fixation.

D'autres caractéristiques et avantages de l'invention seront mieux compris à l'aide de la description qui va suivre, en regard des dessins annexés illustrant, selon des formes de réalisation non limitatives, comment l'invention peut être réalisée, et dans lequel :
- la figure 1 est une vue en perspective ¾ avant d'une fixation de snowboard munie d'une pièce de réglage selon l'invention ;
- la figure 2 est une vue de détail d'éléments d'un mécanisme de réglage de la fixation de la figure 1 ;
- la figure 3 est une vue en perspective ¾ arrière de la fixation de la figure 1 ;
- la figure 4 est une coupe selon IV-IV de la figure 1 ;
- la figure 5 est une vue de dessous de la pièce de réglage seule ;
- la figure 6 est une vue de coté de la pièce de réglage illustrant la mise en place sur un élément de la fixation.

Bien que la forme de réalisation décrite se rapporte à un dispositif de retenue d'un pied ou d'une chaussure sur un engin de sport, il doit être compris qu'elles s'appliquent aussi à d'autres articles comme évoqués avant.

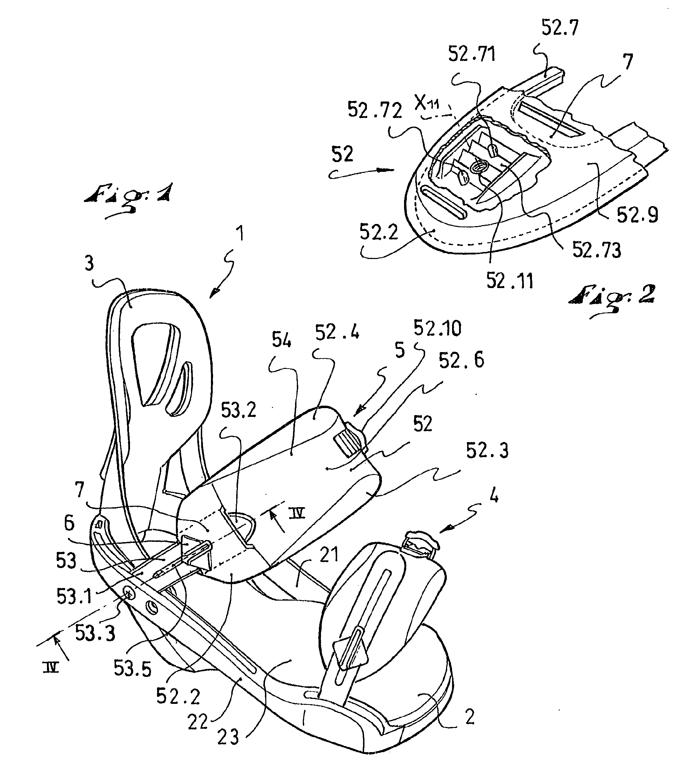

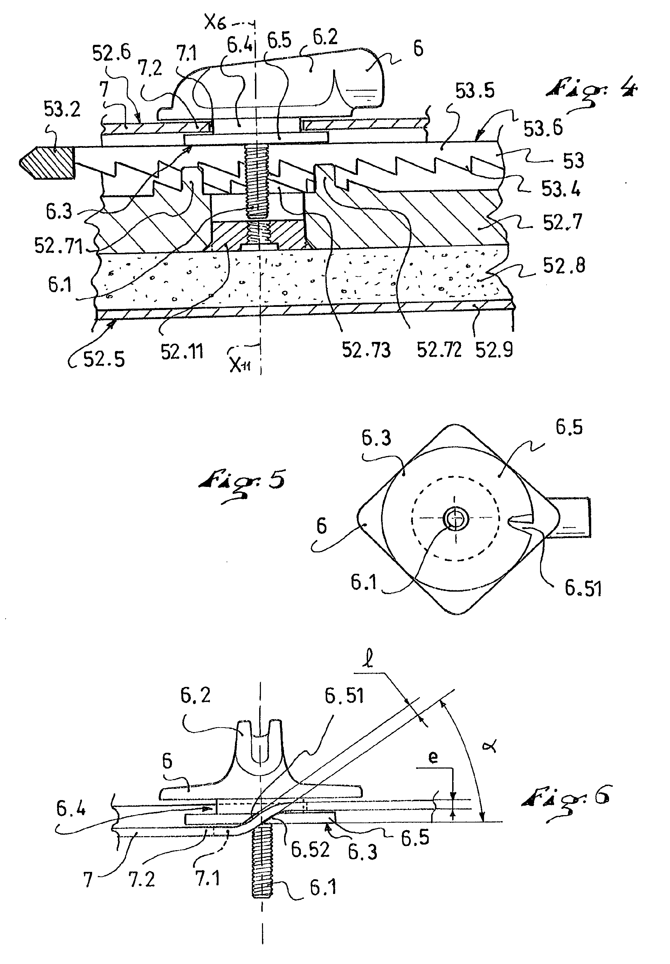

L'invention est présentée à l'aide des figures 1 à 4.

Comme on le voit sur la figure 1, un article de sport 1 ou dispositif de retenue permet la retenue temporaire sur un engin non représenté, d'une chaussure non représentée. L'engin est par exemple une planche destinée à la pratique du snowboard. Le dispositif de retenue ou fixation commun auquel l'invention s'applique est décrit notamment dans les documents EP-1 935 460 et FR-A-2 820 049.

Dans la suite du texte, la notion de intérieur, interne désigne une orientation vers ou en contact avec la chaussure alors que la notion d'extérieur, externe désigne une orientation s'éloignant ou sans contact avec la chaussure.

De manière connue, le dispositif de retenue 1 comprend une embase 2 destinée à être solidarisée avec la planche.

L'embase 2 est bordée latéralement par un flasque latéral 21 et par un flasque médial 22. Chacun des flasques 21, 22 est une pièce qui forme respectivement une partie latérale ou médiale du dispositif 1 pour délimiter une zone d'accueil 23 de la chaussure. Lorsque cette dernière est en place sur le dispositif 1, les flasques 21, 22 longent la semelle latéralement.

Le dispositif 1 comprend aussi un élément d'appui arrière 3, pour que l'utilisateur puisse prendre des appuis arrière avec le bas de jambe.

Le dispositif 1 comprend également deux liens 4, 5 pour retenir de façon amovible la chaussure sur l'embase 2, entre les flasques 21, 22, dans la zone d'accueil 23.

Un premier lien 4 se situe vers l'avant, au niveau de l'articulation métatarsophalangienne quand le pied est retenu. Un deuxième lien 5 se situe vers l'arrière, au niveau du cou-de-pied quand le pied est retenu.

Chacun des liens 4, 5 s'étend transversalement entre les flasques 21, 22.

L'invention concerne principalement le deuxième lien 5 qui est décrit ci-après. L'invention pourrait également s'appliquer au premier lien 4.

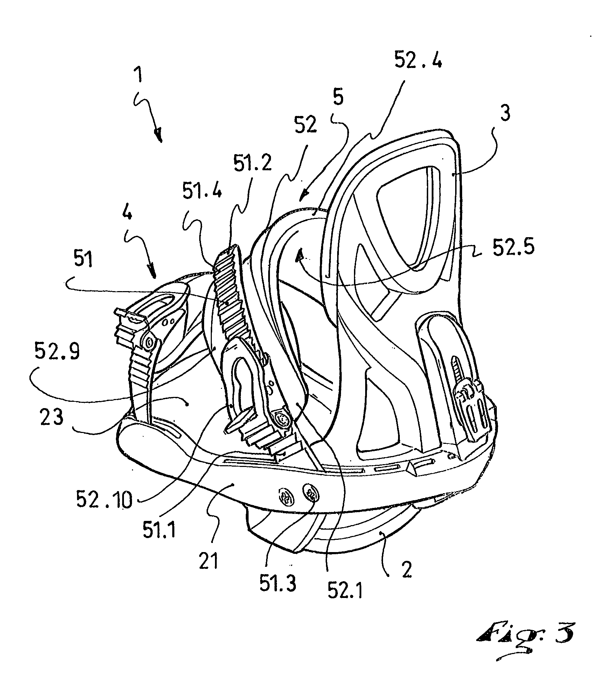

Comme on le comprend notamment à l'aide des figures 1 et 3, le lien 5 comprend une première portion 51, une deuxième portion 52, dite portion de couverture, et une troisième portion 53. L'ensemble formé par les deuxième - 52 et troisième portions 53 définit un tronçon 54.

La première portion 51 s'étend longitudinalement entre une extrémité d'attache 51.1 et une extrémité libre 51.2. L'extrémité d'attache 51.1 est solidarisée au flasque latéral 21 par exemple à l'aide d'une articulation 51.3. L'articulation 51.3 peut comprendre tout élément tel qu'une vis, un écrou, un rivet, ou autre.

La deuxième portion 52, ou portion de couverture, s'étend selon une direction longitudinale depuis une première extrémité 52.1 jusqu'à une deuxième extrémité 52.2, transversalement d'un premier bord 52.3 à un deuxième bord 52.4, et en épaisseur d'une face d'appui 52.5 à une face libre 52.6. Bien entendu, la face d'appui 52.5 est destinée à appuyer sur un pied ou une chaussure. En complément on remarque que la direction longitudinale est orientée transversalement par rapport au dispositif de retenue 1.

La portion de couverture 52 comprend une armature 52.7, laquelle est sensiblement inextensible longitudinalement pour offrir une stabilité de serrage du pied ou de la chaussure, et aussi flexible selon un axe transversal pour permettre une adaptation au pied ou à la chaussure. Une mousse 52.8 enrobe partiellement l'armature 52.7, tout au moins au niveau de la face d'appui 52.5 afin d'apporter un confort au surfeur. L'armature 52.7 et la mousse 52.8 sont insérées dans une housse 52.9.

La troisième portion 53 quant à elle s'étend longitudinalement entre une extrémité d'attache 53.1 et une extrémité libre 53.2. L'extrémité d'attache 53.1 est solidarisée au flasque médial 22 par exemple à l'aide d'une articulation 53.3. Là encore, l'articulation 53.3 peut comprendre tout élément tel qu'une vis, un écrou, un rivet, ou autre.

Les première - 51 et deuxième portions 52 sont reliées de façon amovible.

Les deuxième - 52 et troisième portions 53 sont reliées de façon à former un tronçon 54 à longueur peu variable en usage sauf pour ajuster le réglage du lien 5 à la chaussure. Ce réglage consiste à bien équilibrer la position de la deuxième portion 52 au niveau du cou-de-pied.

Dans cet exemple, la liaison entre les première - 51 et deuxième portions 52 est réalisée par un mécanisme de serrage à cliquet 52.10. Ce mécanisme 52.10 est solidarisé sur l'armature 52.7, au niveau de la deuxième extrémité 52.1 de la deuxième portion 52. La première portion 51 comprend une série de dents 51.4 orientées vers l'extérieur. Ces dents 51.4 se répartissent depuis l'extrémité libre 51.2 jusqu'à proximité de l'articulation 51.3. Les dents 51.4 coopèrent avec le cliquet pour bloquer le lien 5 à une longueur de serrage déterminée. L'extrémité libre 51.2 de la première portion 51 passe au-dessus ou dans un tunnel de la deuxième portion 52.

Le tronçon 54 est réglable en longueur afin d'ajuster le positionnement de la deuxième portion 52. Pour cela, le réglage est réalisé grâce aux éléments suivants.

La troisième portion 53, formant une languette, comprend une série de dents 53.4 orientées vers l'intérieure et une rainure longitudinale 53.5 centrée sur la languette. Les dents 53.4 se répartissent depuis l'extrémité libre 53.2 jusqu'à proximité de l'articulation 53.3. La rainure longitudinale 53.5 s'étend sur une longueur similaire.

L'extrémité 52.2 de la deuxième portion 52 est également aménagée. Un écrou 52.11 est fixé sur l'armature 52.7 de manière à ce que son axe de révolution X11 passe par les plans médian et transversal de la deuxième portion 52. De part et d'autre de l'écrou 52.11, selon une direction longitudinale, deux tétons 52.71, 52.72 s'étendent vers l'extérieur. Ces deux tétons 52.71, 52.72 sont destinés à se loger dans la rainure longitudinale 53.5 de manière à positionner et guider en translation la troisième portion 53 par rapport à la deuxième portion 52. De plus, une série de dents 52.73 orientées vers l'extérieur se répartissent de part et d'autre d'une zone comprenant les deux tétons 52.71, 52.72, selon une direction transversale. Les dents 52.73 sont dimensionnées pour coopérer avec les dents 53.4 de la troisième portion 53, lorsque la troisième portion 53 est rapprochée de la deuxième portion 52, immobilisant ainsi la troisième portion 53 par rapport à la deuxième portion 52.

Enfin, une pièce de réglage 6 rotative autour d'un axe X6 comprend une tige filetée 6.1 centrée sur cet axe. La tige filetée 6.1 est destinée à être en prise avec l'écrou 52.11 et à passer à travers la rainure longitudinale 53.5. La pièce de réglage 6 comprend une interface 6.2 pour sa manipulation par un utilisateur. La pièce de réglage 6 comprend également un surface de pression inférieure 6.3, perpendiculaire à l'axe X6 et positionnée à la base de la tige filetée 6.1. La surface de pression 6.3 est plus large que la largeur de la rainure longitudinale 53.5.

Ainsi, lorsque la pièce de réglage 6 est vissée dans l'écrou 52.11, la surface de pression 6.3 se rapproche de la deuxième portion 52. La surface de pression 6.3 entre alors en contact avec une face externe 53.6 de la languette 53, face opposée aux dentures 53.4. En conséquence, en continuant le vissage, la surface de pression 6.3 exerce un effort sur la troisième portion 53 tendant à la rapprocher de la deuxième portion 52. Dès lors, les dents 53.4 entrent en prise avec les dents 52.73, provoquant alors la solidarisation entre les deuxième - 52 et troisième portions 53 formant le tronçon 54.

Les dents 53.4 et 52.73 forment des moyens d'indexation au sens de l'invention. D'autres moyens d'indexation peuvent être envisagés comme par exemple un ou plusieurs pions coopérant avec une rangée de trous.

Pour régler la longueur du tronçon 54, la première étape consiste à dévisser la pièce de réglage 6 jusqu'à ce que les dents 53.4 ne soient plus en prise avec les dents 52.73. La deuxième étape consiste à déplacer la deuxième portion 52 par rapport à la troisième portion 53 jusqu'à obtenir la longueur souhaitée du tronçon 54. Il convient de noter que ce déplacement est guidé par les tétons 52.71, 52.72 coopérant avec la rainure longitudinale 53.5. Puis, la troisième étape consiste à revisser la pièce de réglage 6 pour que les dents 53.4 et 52.73 soient à nouveau en prise.

Lors de la première étape, il y a un risque de perdre la pièce de réglage 6 si on la dévisse complètement. Pour pallier ce problème, la pièce de réglage 6 est liée à une paroi de retenue 7 solidaire de l'article de sport. Dans cet exemple, la paroi de retenue 7 est une partie de la housse 52.9 recouvrant l'extrémité 52.1 de la deuxième portion 52, coté extérieur.

Pour lier la pièce de réglage 6 à la paroi de retenue 7, la pièce de réglage 6 comprend une gorge circulaire 6.4 destinée à recevoir une partie d'une paroi de retenue 7. Cette gorge est délimitée d'un coté par l'interface de manipulation 6.2 et, de l'autre coté, par une collerette 6.5, préférentiellement en forme de disque. La tige filetée 6.1 fait saillie de cette collerette 6.5. La surface de pression 6.3 est formée par la face inférieure de la collerette 6.5, coté tige filetée 6.1.

La paroi de retenue 7 comprend une ouverture circulaire 7.1 dont le diamètre est sensiblement plus petit que le diamètre de la collerette 6.5. Ainsi, lorsque la pièce de réglage 6 est insérée à travers l'ouverture 7.1 de la paroi de retenue 7, le bord circulaire 7.2 de l'ouverture se loge dans la gorge circulaire 6.4. La pièce de réglage 6 est ainsi maintenue sur la paroi de retenue 7 et ne peut être démontée facilement.

Avantageusement, la paroi de retenue 7 est disposée de manière à placer la pièce de réglage 6, quand elle est insérée sur la paroi de retenue, à une position proche de son emplacement en usage. Cette disposition permet de rapidement fixer la pièce de réglage. Dans le cas présent, la pièce de réglage 6 sera située à proximité de l'extrémité 52.2 de la portion 52, proche de l'écrou 52.11.

De même, la paroi de retenue forme préférentiellement un tunnel dans lequel passe une partie de la portion 53. Ce tunnel permet de guider en translation la portion 53 et de la maintenir proche de la deuxième portion 52.

Pour faciliter la mise en place de la pièce de réglage 6 sur la paroi de retenue 7, plusieurs solutions sont envisagées.

Une première solution consiste à utiliser une paroi de retenue 7 relativement souple. La paroi de retenue 7 peut donc se déformer élastiquement pour pouvoir passer par-dessus la collerette 6.5 et revenir s'engager dans la gorge circulaire 6.4. Bien entendu, plus la paroi de retenue 7 est souple, moins le maintien de la pièce de réglage 6 sur la paroi de retenue 7 sera bon.

Une deuxième solution consiste à rendre la collerette 6.5 plus souple, par exemple, en utilisant une matière souple et/ou en une forme de collerette adaptée. Dans ce cas, c'est la collerette qui sera déformée. Cette solution est adaptée si la paroi est relativement rigide. Par contre, cette solution est mal adaptée au mode de réalisation précédent car elle fragilise la surface de pression 6.3, celle-ci se déformant avec la collerette.

Une troisième solution consiste à fendre localement la collerette 6.5. Cette fente 6.51 a une largeur « I » légèrement supérieure à l'épaisseur « e » de la paroi 7. Elle s'étend de la périphérie de la collerette 6.5 jusqu'à, sensiblement, le fond de la gorge circulaire 6.4. Par la suite, l'engagement d'une partie du bord circulaire 7.2 de l'ouverture 7.1 de la paroi de retenue 7 dans la fente 6.51 permet guider le reste du bord circulaire 7.2 dans la gorge 6.4. En effet, une rotation de 360° de la pièce de réglage 6 autour de son axe X6, amène automatiquement tout le bord circulaire 7.2 dans la gorge circulaire 6.4.

Avantageusement, la fente 6.51 est inclinée d'un angle α par rapport à un plan perpendiculaire à l'axe de rotation X6. Préférentiellement, l'angle α est égale à 45° +/- 10°. Cet angle α permet de former une rampe 6.52 à l'intérieur de la fente 6.51. En conséquence, lorsque la pièce de réglage 6 est tournée selon le sens horaire et qu'une partie du bord circulaire 7.2 est engagée dans la fente, la rampe guide le bord circulaire 7.2 vers l'intérieur de la gorge circulaire 6.4. Le même principe peut s'appliquer pour démonter la pièce de réglage 6 de la paroi de retenue 7, en tournant la pièce de réglage 6 selon le sens antihoraire.

Cette troisième solution peut avantageusement se combiner avec une paroi de retenue 7 souple.

L'invention n'est pas limitée au mode de réalisation décrit.

Elle s'applique notamment à d'autres modes de réalisation du réglable en longueur de la portion 54. Par exemple, la troisième portion 53 peut être une simple languette munie d'une rangée de trous alignés selon une ligne médiane longitudinale. Ces trous sont destinés à recevoir la tige filetée 6.1 de la pièce de réglage 6. Ainsi, les moyens d'indexations permettant de positionner la deuxième portion 52 par rapport à la troisième portion 53 sont réalisés par ces trous et la tige filetée.

Elle peut également s'appliquer à un élément du réglage de la butée d'un élément d'appui arrière tel que décrit que décrit, par exemple, dans le document EP-A-1 108 450.

Elle peut aussi s'appliquer à une pièce de réglage d'une chaussure de ski ou d'une fixation de ski.

## Revendications

1. Pièce de réglage (6) rotative apte à être solidarisée à une première pièce constitutive (52) d'un article de sport (1),
**caractérisée en ce que** la pièce de réglage (6) comprend une gorge (6.4) destinée à recevoir une partie (7.2) d'une paroi de retenue (7) liée à l'article de sport (1) de manière à maintenir la pièce de serrage (6) sur la paroi de retenue (7), lorsque la pièce de serrage (6) est désolidarisée de la première pièce constitutive (52) de l'article de sport (1).

2. Pièce de réglage (6) selon la revendication 1 **caractérisée en ce que** la pièce de réglage (6) est destinée à faire coopérer un deuxième moyen d'indexation (53.4) d'une deuxième pièce constitutive (53) de l'article de sport (1) avec un premier moyen d'indexation (52.73) lié à la première pièce constitutive (52) de l'article de sport.

3. Pièce de réglage (6) selon l'une des revendications précédentes **caractérisée en ce que** la pièce de réglage (6) est apte à exercer un effort sur la deuxième pièce constitutive (53) de l'article de sport (1) de manière à la rapprocher de la première pièce constitutive (52) de l'article de sport (1).

4. Pièce de réglage (1) selon l'une des revendications précédentes **caractérisée en ce que** la paroi de retenue (7) est solidaire de la première pièce constitutive (52) de l'article de sport (1).

5. Pièce de réglage (1) selon l'une des revendications précédentes **caractérisée en ce que** la paroi de retenue (7) est souple.

6. Pièce de réglage (1) selon l'une des revendications précédentes **caractérisée en ce que** la gorge (6.4) de la pièce de réglage (6) est bordée par une collerette (6.5) munie d'une fente (6.51) permettant de faciliter la mise en place de la pièce de réglage (6) sur la paroi de retenue (7).

7. Pièce de réglage (1) selon la revendication précédente **caractérisée en ce que** la fente (6.51) est inclinée d'un angle (α) par rapport à un plan perpendiculaire à l'axe de rotation (X6) de la pièce de réglage (6).

8. Pièce de réglage (1) selon l'une des revendications précédentes **caractérisée en ce qu'**elle comprend une tige filetée (6.1) apte à coopérer avec le filetage d'un écrou (52.11) solidaire de la première pièce constitutive (52) de l'article de sport (1).

9. Fixation de snowboard (1) **caractérisée en ce qu'**elle comprend une pièce de réglage (6) selon l'une des revendications précédentes, la première pièce constitutive (52) étant une partie d'un lien (5) de la fixation (1).
